# EUROPEAN PATENT APPLICATION

(11) **EP 2 371 499 A2**
(43) Date of publication of application: **05.10.2011**
(21) Application number: 11250153.1
(22) Date of filing: 11.02.2011
(51) Int. Cl.: B26D 3/18, A47J 43/25, F16B 47/00

(54) **Kitchenware appliance and/or food preparation apparatus**

(30) Priority: 12.02.2010 HK 10101708
(71) Applicant: Union Lucky Industrial Limited, Kowloon, Hong Kong (CN)
(72) Inventor: So, Shun, Kowloon (HK)
(74) Representative: Stevenson-Hill, Jack Patrick

(57) **Abstract**

A manually operated kitchenware apparatus which has a suction operated mounting foot that can be operated by twisting or rotating a body of the apparatus. The apparatus can also have a removable cutter blade and a handle that receives a plurality of interchangable grating blades.

## Description

### Field of the Invention

The current invention relates to a kitchenware appliance and in particular to apparatus for preparing food items.

### Background to the Invention

Various manually operated kitchenware appliances are known for preparing food items. It is a general aim of designers of such apparatus to make them easy to use and easy to clean. In terms of cleaning an apparatus should be easy to disassemble for cleaning and easy to reassembly again for use. Easy to use generally means that an apparatus can be used with one hand and/or does not have fiddly levers or knobs to operate which can be difficult or impossible to manipulate by the elderly and/or people with limited movement or strength in their hands.

In addition, in some markets consumers like an apparatus which is multi-purpose and can perform a number of different functions thus saving the need to purchase and store multiple kitchenware items, each of which might individually be used on a regular basis.

### Summary of the Invention

It is an object of the present invention to provide a kitchenware appliance, and in a particular manually operated food preparation apparatus, which overcomes or ameliorates one or more of the above-mentioned problems.

According to a first aspect of the invention there is provided a manually operated kitchenware appliance which has a suction operated mounting foot that can be operated by twisting or rotating the body of the appliance/apparatus. The mounting foot comprises a suction pad and a cam which translates twisting or rotation of the body into axial displacement of inner and outer parts of the suction pad thereby forming a suction cavity that secures the suction pad to a flat surface.

According to a second aspect of the invention there is a potato chipper apparatus which can optionally be secured to a surface via a twisting motion of the body of the apparatus and which is provided with a cutter comprising a cutter frame surrounding a plurality of vertical and horizontal cutter blades and wherein the cutter frame is slidably received within a housing of the body of the chipper and is secured therein by a bayonet-type catch having detents which can be retracted by squeezing the catch in order to slidably remove the cutter from the body.

According to the third aspect of the invention there is provided a potato chipper apparatus which can optionally be secured to a flat surface by twisting of the chipper body, and which comprises a lever handle for operating the chipper device and wherein the lever handle can receive a plurality of interchangeable grater blades such that the chipper apparatus can also be used for grating food items. In one particular embodiment the chipper is provided with a food receiving container which can be mounted below the handle for receiving grated food items and/or can be mounted to the chipper in order to receive cut potato segments.

According to a yet a further aspect of the invention there is provided a manually operated kitchenware appliance as defined in any one of the appended claims.

Further aspects of the invention will become apparent from the following description which is given by way of example only.

### Brief Description of the Drawings

Preferred embodiments of the invention will now be described by way of example with reference to the following Figures in which,

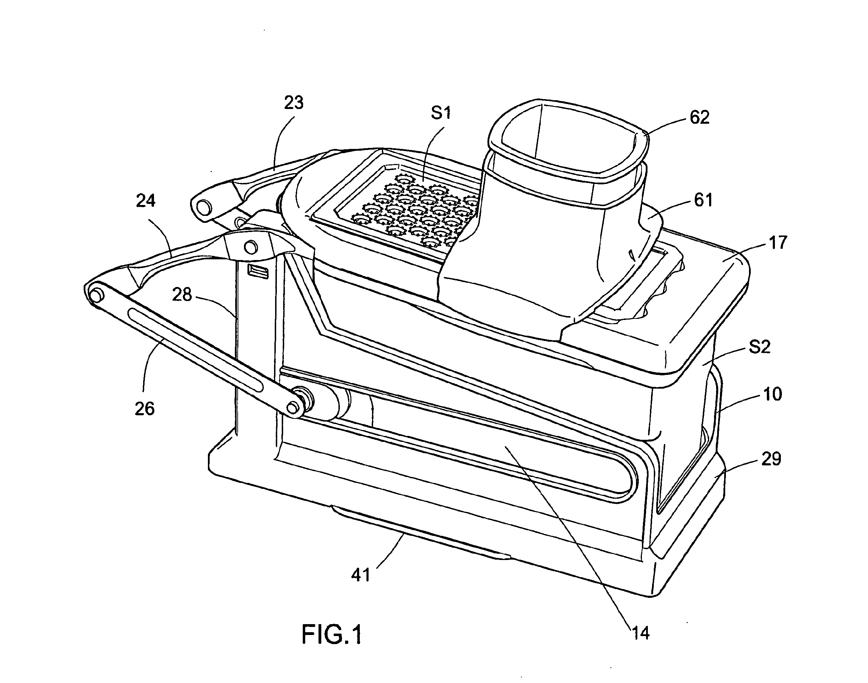

Figure 1 is a perspective illustration of a kitchen apparatus according to the invention,

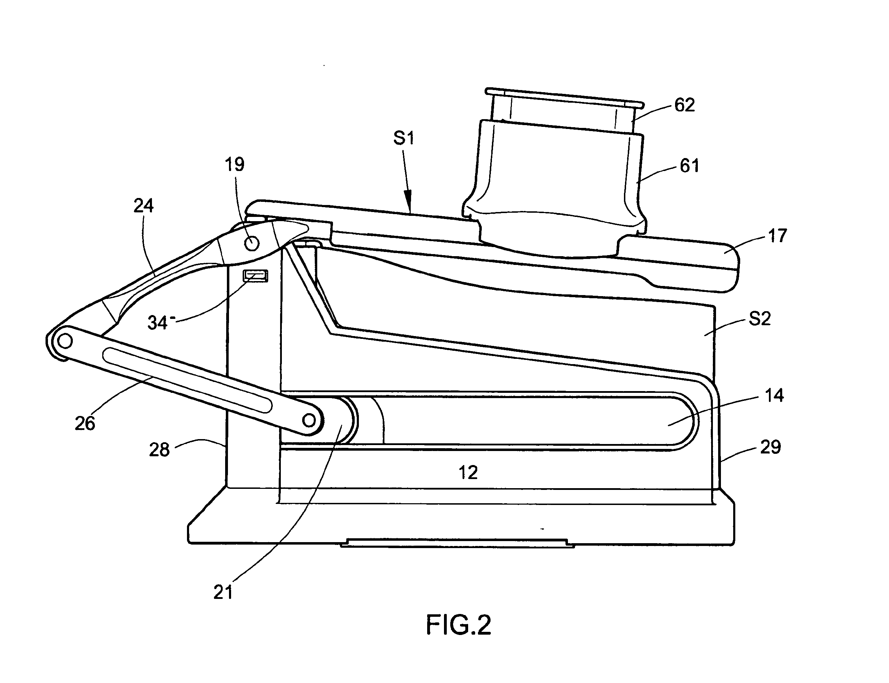

Figure 2 is a side view of the apparatus,

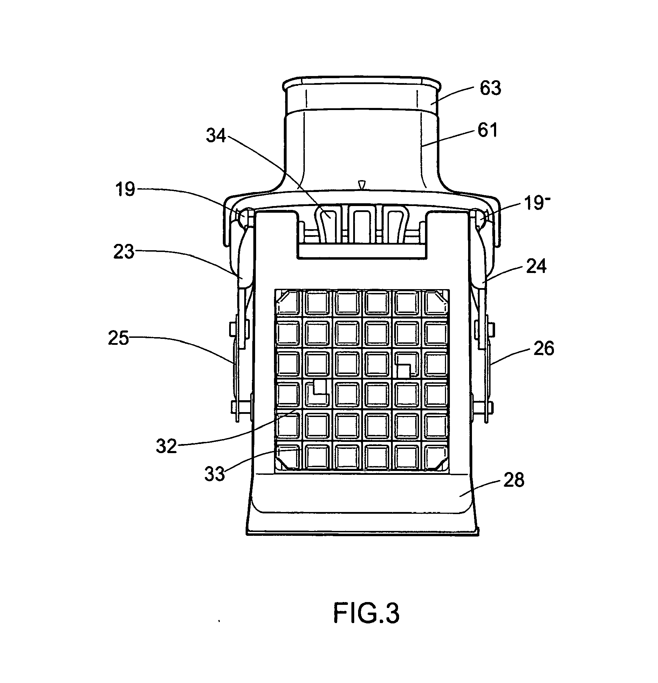

Figure 3 is a front end view of the apparatus,

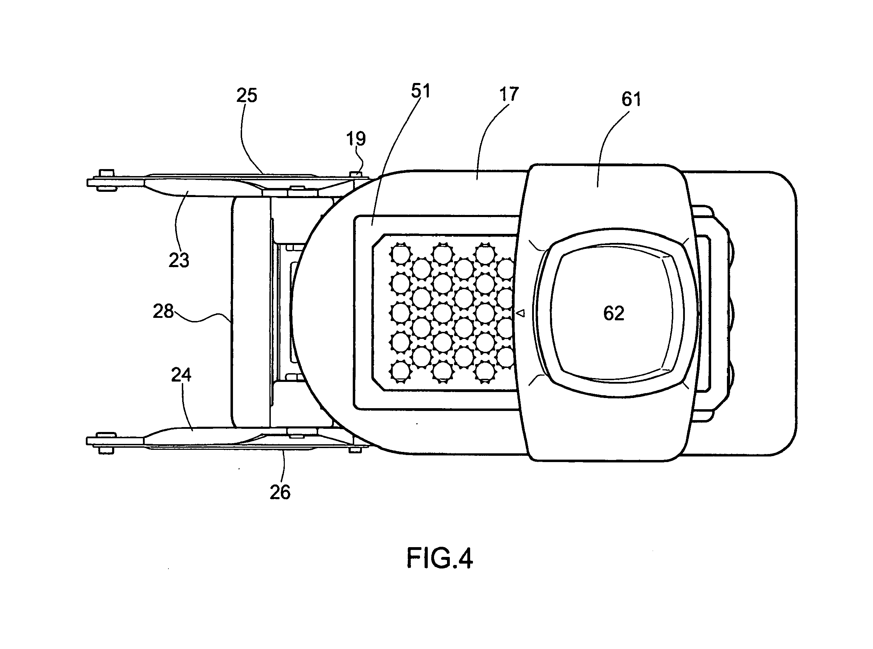

Figure 4 is a top view of the apparatus,

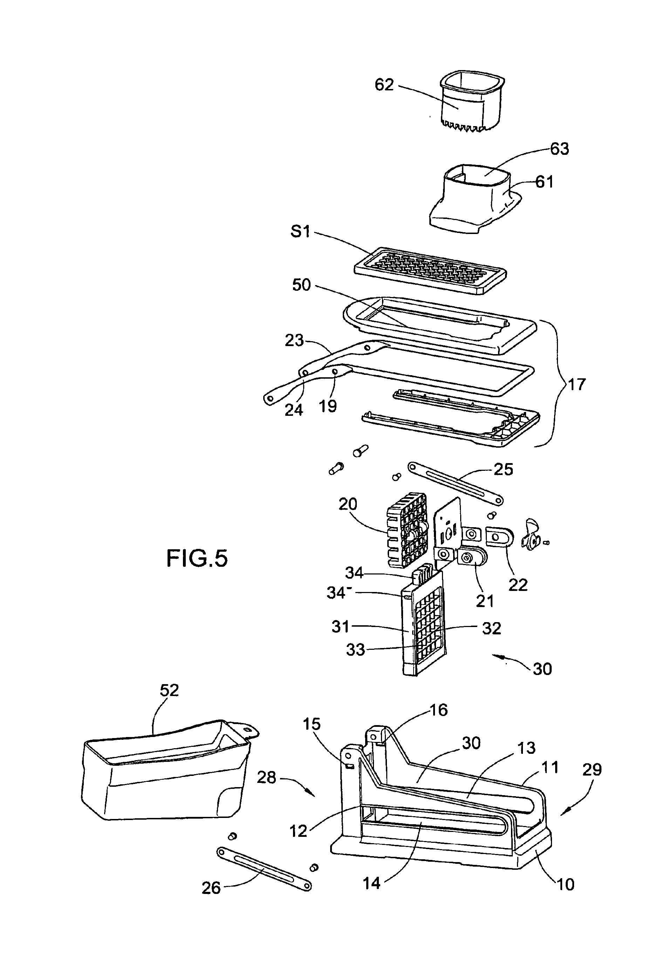

Figure 5 is an exploded view of the apparatus,

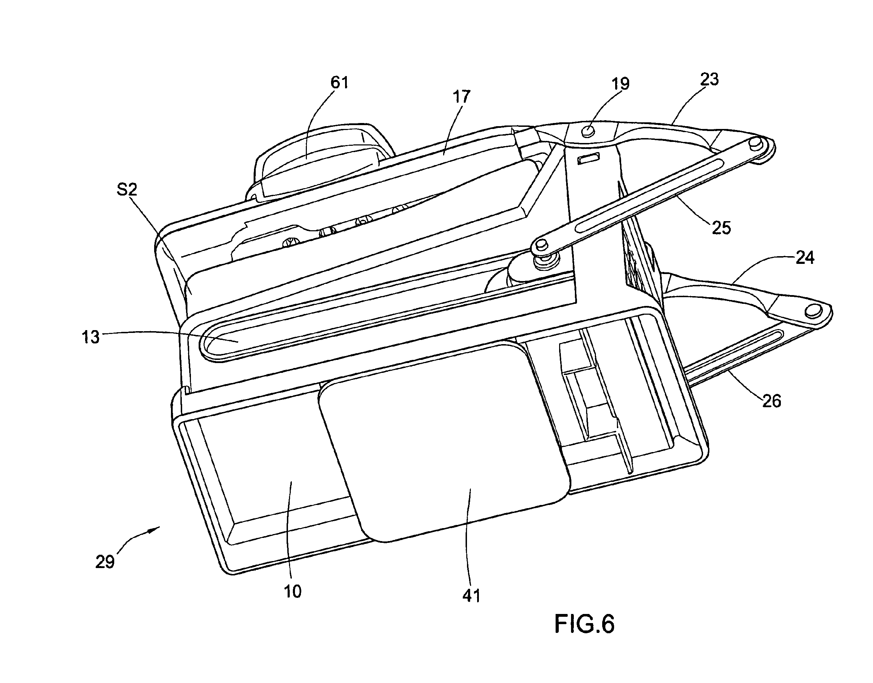

Figure 6 is a perspective bottom view of the apparatus,

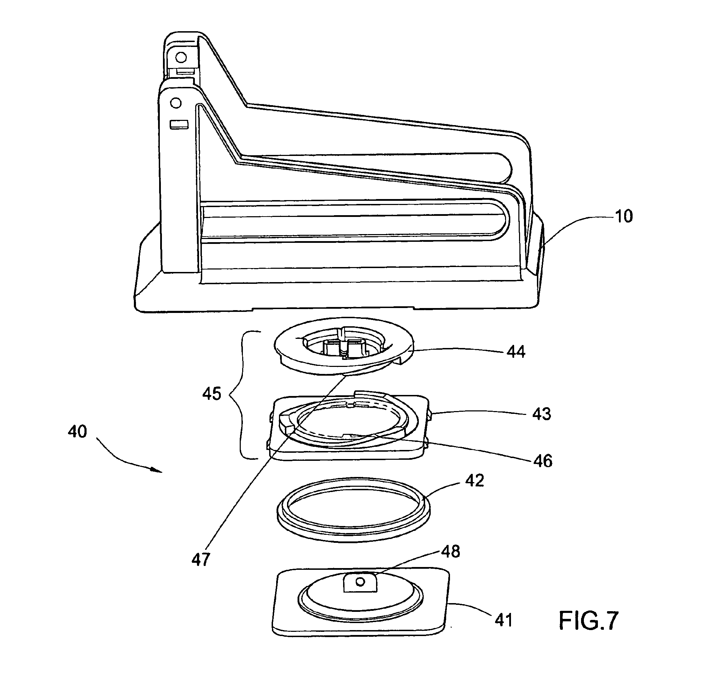

Figure 7 is an exploded view of a mounting food for the apparatus,

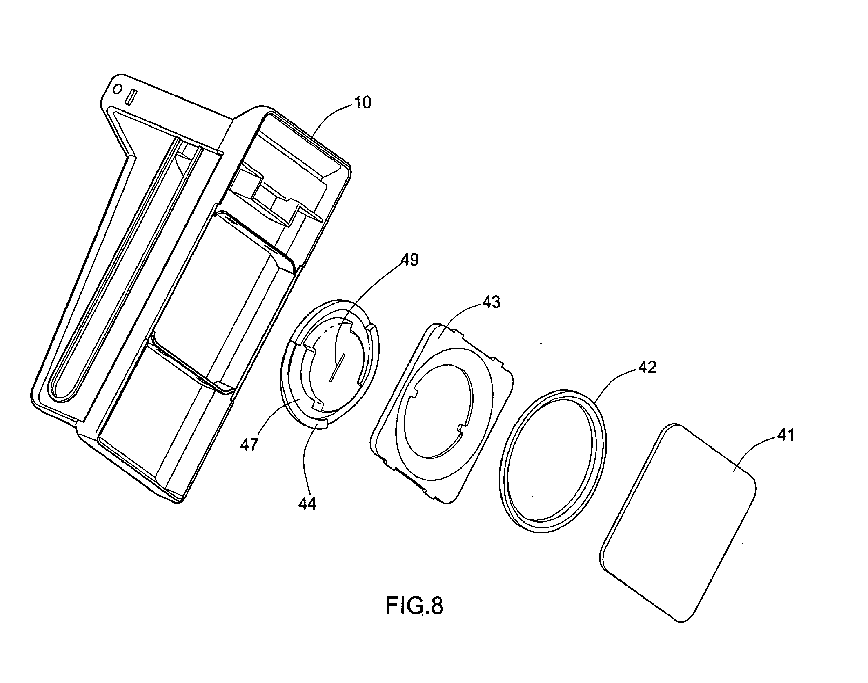

Figure 8 is a second exploded view of a mounting food for the apparatus,
Figure 9 is a perspective view of the apparatus with a food collection container,
Figure 10 is a second perspective view of the apparatus with the food collection container,

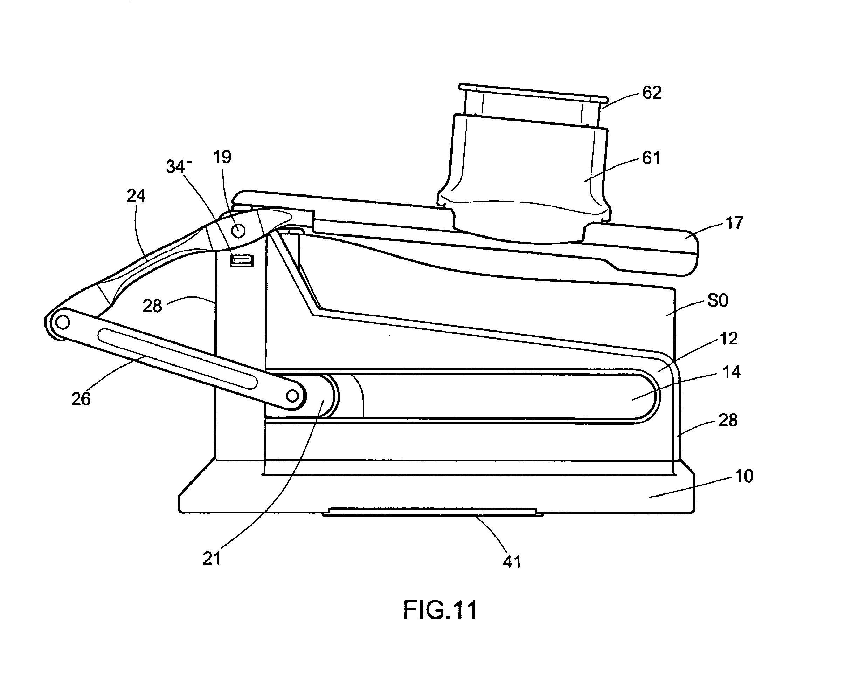

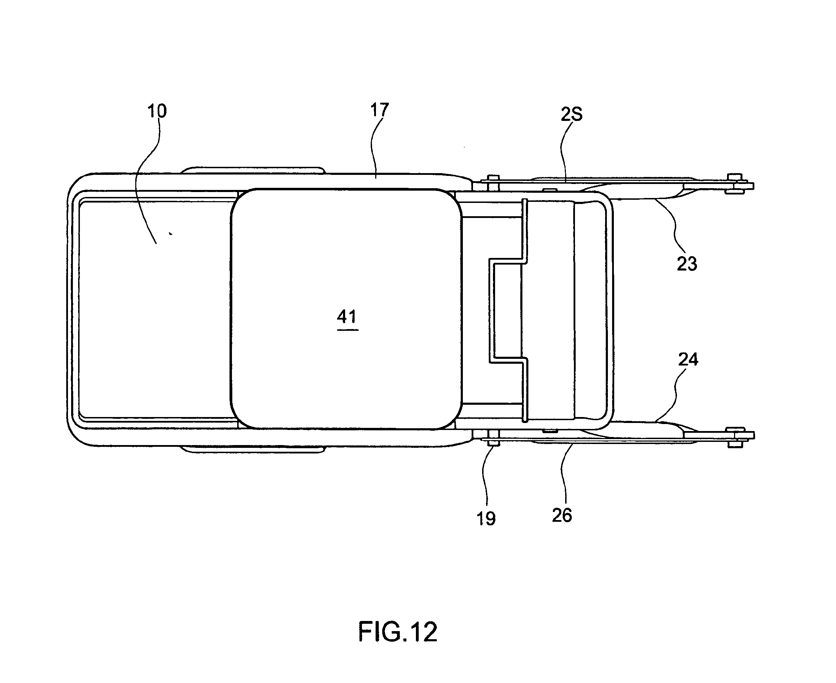

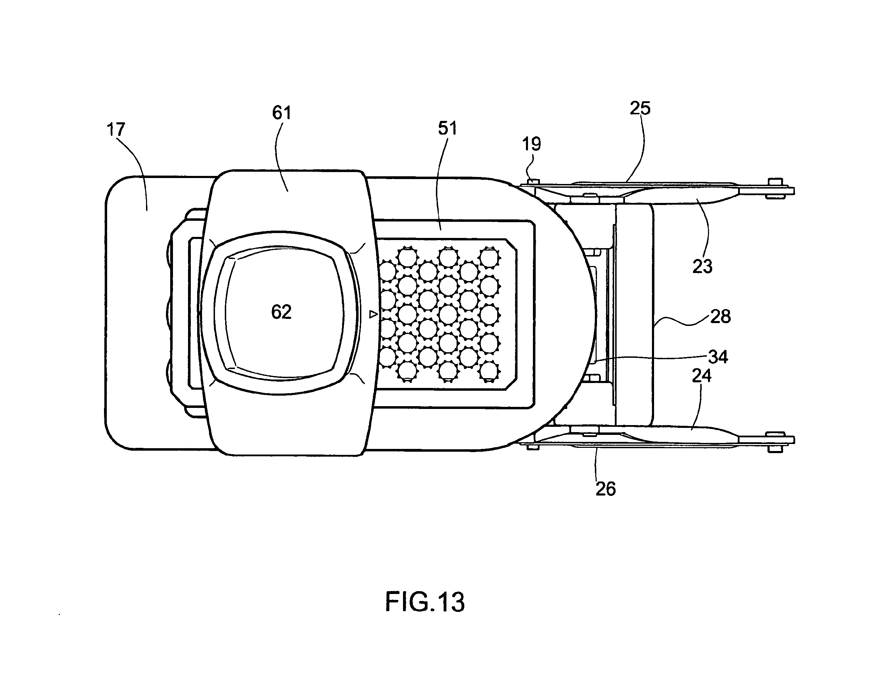

Figures 11, 12 and 13 are line drawings of the side, bottom and top views respectively of the apparatus.

### Detailed Description of the Invention

The following description is given by way of example only to illustrate the invention and is not intended to limit the scope of use for functionality of the invention. In particular, the invention is not limited in its application to the details of construction and the arrangements of components set forth in the following description or illustrated in the accompanying drawings. The invention is capable of other embodiments and of being practiced or being carried out in various ways. Also, it is to be understood that the phraseology and terminology used is for the purpose of description and should not be regarded as limiting.

In the following description and accompanying drawings the invention is described as embodied in a potato cutter or chipper. This is also not intended to limit the scope of use of the invention and the skilled addressee will understand that the invention may also be practiced in other types of apparatus and kitchenware appliance.

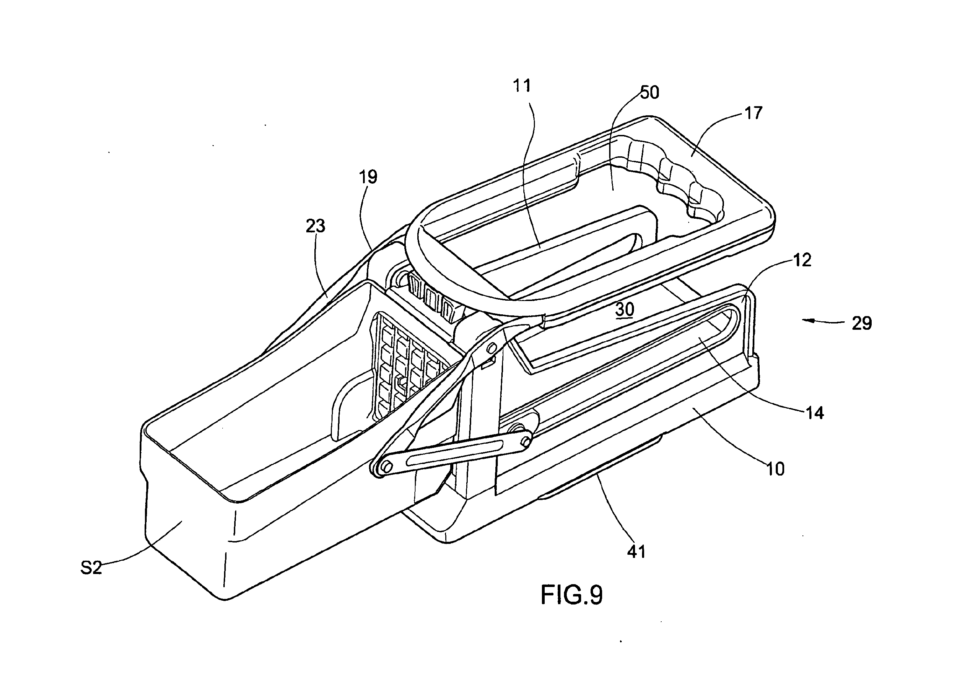

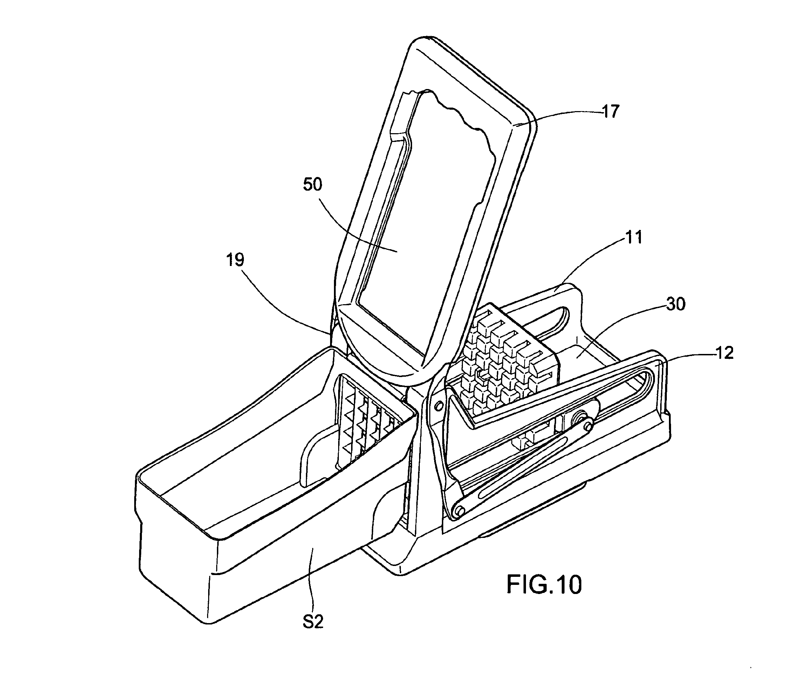

Referring to the accompanying drawings, in an exemplary embodiment the invention is practiced in a hand operated lever type potato chipper. The potato chipper comprises a main body portion 10 having a pair of spaced apart sides 11, 12 with an open area 30 between the sides. Lengthwise along each side is a respective slot 13, 14. At a front or operation end 28 of the chipper the sides 10, 12 have a greater height than at the back end 29 of the chipper. Two concentric apertures 15, 16 are located respectively at the top front of each wall 11, 12. The concentric apertures 15, 16 provide for the pivotal attachment of a lever handle 17 about a pivot axis 19 which concentric with the apertures 15, 16. Located within the space 30 between walls 11, 12 is a pusher block 20. The pusher block 20 is slidably arranged with the longitudinal slots 13, 14 in respective walls 11, 12 via sliding guides 21, 22. The handle arrangement 17 has two lever arm extensions 23, 24 extending forward of the pivot axis 19. The distal end of each forwardly extending lever arm 23, 24 is pivotably connected with a respective link arm 25, 26. The other end of the link arms 25, 26 are pivotably connected with the pushing block guides 21, 22. In this way pivotal movement of handle 17 about the pivot axis from a first "open" position illustrated in Figure 10 to a "closed" position illustrated in Figure 9 causes a linear longitudinal movement of the pusher block 20 through the space 30 between the sides 11, 12 of the base 10.

When the handle 17 is pivoted up to the open position as shown in Figure 10 the pivot and link arms move the pusher block 20 towards the back 29 of the base 10. When the handle 17 is pivoted downwardly to a position shown in Figure 9 the pivot and link arms move the pusher block 20 forward to the front end 28 of the base 10. Located at the front of the base 10 between the sides 11, 12 is a cutter 30. The cutter 30 comprises a cutter frame 31 surrounding a mesh array of vertical and horizontal cutter blades 32, 33. The cutter frame 31 is arranged to be removably received between the walls 11, 12 at the front of the base 10 by removing in vertical manner. A pair of elongate vertical channels (not shown) are provided on the inner sides of the walls 11, 12 so that the cutter frame 31 can be vertically slid into position at the front 28 of the base 10. A locking clip or latch 34 with detents 34' is provided between the upper parts of the channel to close and lock the cutter frame 31 into position. This allows the cutter 30 to be easily removed by simply unlatching and vertically sliding the cutter up to remove it from the base 10 for cleaning.

In use as a potato cutter the handle 17 is pivoted to the upwards or "open" position as shown in Figure 10 and a potato placed in the area 30 of the base between the sides 11, 12 and in front of the pusher block 20. When the handle 17 is pivoted to the downwards or "closed" position as shown in Figure 9 the pusher block 20 moves forward pushing the potato into and through the array of vertical and horizontal blades 32, 33 thereby forming a plurality of elongate potato strips or segments in the shape of French fries which emerge from the front of the cutter 30.

For securing the potato cutter to a flat surface thereby preventing it moving during such use the underside of the base 10 is provided with a suction mounting foot 40 which can be operated to suction attach the base to a flat surface. The suction foot 40 comprises a suction head 41 connected to the base unit 10 by a cam arrangement 45. The cam 45 comprises two cam halves 43, 44 which rotationally cooperate and have respective cooperating ramped surfaces 46, 47. When the two cam halves 43, 44 are rotated with respect to each other the ramped surfaces 46, 47 move across each other causing axial displacement of the two cam halves 43, 44. The first cam half 43 is attached via an attachment ring 42 to an outer periphery of the suction pad 41. The second cam half 44 is attached to the underside of base 10 and to the centre of the suction pad 41 via a tab 48 which is secured within a tab receiving slot 49 of the second cam half 44. Due to the outer cam half 43 being attached to an outer periphery of the suction pad 41 and the second cam half 44 being attached to the centre of the suction pad 41 via the tab 48 axial displacement of the two cam halves causes movement of the other periphery of the suction pad 41 with respect to the centre portion of the suction pad 41 forming a suction cavity in the pad 41. When the potato chipper is placed on a flat surface with the suction foot 40 against the flat surface and the chipper body 10 is twisted, which can be achieved with a single handled movement by an operator or user, the outer periphery and centre of the suction pad 41 are displaced forming a suction cavity against the flat surface and securely fastening the potato chipper to the flat surface via suction. The suction foot is made from a deformable material having a high coefficient of friction, such that the foot remains stationary on the flat surface during twisting or rotating of the body.

In one exemplary embodiment of the invention the pivoting handle 17 of the potato chipper comprises a substantially rectangular-shaped frame having a central opening 50 surrounded by the frame. The apparatus is provided with a plurality of interchangeable grating plates 51 which can be releasably secured within opening 50 of the handle. A removable collection container is provided that locates within the area 30 between the two walls 11, 12 of base 10. When the handle is placed in the downward position as in Figure 9 the collection container 52 can be located within the area 30 and, if the apparatus is suction secured to a flat surface, food items can be grated against the grating plates 51 via a single handed operation. Grated items are collected in the collection container 52.
A plurality of different grating plates 51 each having a different grating blade
arrangement are provided and are interchangeable within the opening 50 of the handle for grating different types of food items or providing different size and texture of grated food items. Various grating blade arrangements for achieving this purpose are known in the art.

In a further exemplary embodiment the apparatus is provided with a food holder for helping with the grating operation of small food items to be grated. A slider 61 is provided in sliding arrangement with the handle 17 and straddling across the opening 50 in which the grating plate 51 is located. The slider has an opening with upwardly extending walls 63. When located on the handle above the grating plates the opening with extending walls 63 provides a reservoir into which small food items can be placed. A pusher 62 locates within the opening and is used to push the small food items against the grating plates 51 and in combination with the walls 61 provides a grip with which a user can push the slider 61 backwards and forwards along the handle 17 and consequently grate food against the grating plate 51.

In a further exemplary embodiment of the invention the container 52 used in conjunction with the grating plates 51 for catching grating food can also be mounted against the front end 28 of the potato chipper and has an opening in its wall such that potato strips or segments pushed through the mesh array of horizontal and vertical cutting blades are captured in the container 52.

## Claims

1. A manually operated kitchenware apparatus comprising a body and a suction operated mounting foot rotatably located on the body, and wherein twisting or rotating the body with respect to the suction operated mounting foot causes deformation of the foot thereby forming a suction cavity that secures the suction pad to a mounting surface.

2. The apparatus of claim 1 where the foot is made from a deformable material having a high coefficient of friction, such that the foot remains stationary on a mounting surface during twisting or rotating of the body.

3. The apparatus of claim 1 or claim 2 wherein the foot comprises a suction pad and a cam which translates twisting or rotation between the body and foot into axial displacement of inner and outer parts of the suction pad forming the suction cavity that secures the suction pad to a mounting surface.

4. The apparatus of claim 3 wherein the cam comprises first a cam half attached to the foot and having a first ramp surface, and a second cam half attached to the body and having a second ramp surface, the first and second ramp surfaces cooperate to translate the twisting or rotation between the body and foot into the axial displacement.

5. A potato chipper apparatus comprising:
a body having a base,
a cutter located with the body,
a pusher slidably located with the body for pushing a foodstuff through the cutter,
a handle pivotally located with the body and the pusher for slidably moving the pusher, and
wherein the cutter comprises a cutter frame surrounding a mesh array of cutter blades and wherein the cutter frame is removably located with the housing of the body.

6. The potato chipper of claim 5 wherein the body further comprises two side members defining between them a space above the base, the cutter being slidably received within one end of the space and supported by the two side members.

7. A manually operated kitchenware apparatus comprising:
a body having a base,
a handle for operating the apparatus; the handle comprising a frame, and
a grater removably located within the frame such that the apparatus can be used for grating foodstuffs.

8. The apparatus of claim 7 wherein the body further comprises two side members defining between them a space above the base, the handle mounted to the two side members, the apparatus further comprising a food receiving container removably located in the space and below the handle for receiving grated foodstuffs..

9. The apparatus of claim 7 or claim 8 further comprising:
a cutter located with the body,
a pusher slidably located with the body for pushing a foodstuff through the cutter blade, the handle pivotally located with the body and the pusher for slidably moving the pusher.

10. The apparatus of any one of claims 7 to 9 wherein the cutter comprises a cutter frame surrounding a mesh array of cutter blades and wherein the cutter frame is removably located with the housing of the body.

11. The apparatus of any one of claims 7 to 10 wherein the cutter is slidably received within one end of the space and supported by the two side members.

12. The apparatus of any one of claims 5 to 11 wherein the cutter frame is slidably received with the body and is secured to the body by a bayonet-type catch comprising two tabs and a detent which can be retracted by squeezing the tabs for removing the cutter from the body.

13. The apparatus of any one of claims 5 to 12 wherein the body comprises a base and a top, and wherein the cutter is slidably received with the body from the top.

14. The apparatus of any one of claims 5 to 13 wherein at least one of the side members has an aperture into which a detent is received to secure the cutter to the body.

15. The apparatus of any one of claims 5 to 14 further comprising a suction operated mounting foot rotatably located on the base, and wherein twisting or rotating the body with respect to the suction operated mounting foot causes deformation of the foot thereby forming a suction cavity that secures the suction pad to a flat surface.
